# EUROPEAN PATENT APPLICATION

(11) **EP 4 814 339 A1**
(43) Date of publication of application: **30.09.2026**
(21) Application number: 26166982.4
(22) Date of filing: 24.03.2026
(51) Int. Cl.: F16H 21/18, F16H 53/00, H01R 43/04, H01R 43/048, H02K 7/075, F16C 3/22, F16C 19/46

(54) **TRANSMISSION MECHANISM, ELECTRIC DRIVE DEVICE AND TERMINAL CRIMPING DEVICE**

(30) Priority: 28.03.2025 CN 202510389837
(71) Applicant: Tyco Electronics (Shanghai) Co., Ltd., Pilot Free Trade Zone Shanghai 200131 (CN); Tyco Electronics Technology (SIP) Ltd., Suzhou 215026 (CN)
(72) Inventor: Zhang, Shen, Shanghai, 200233 (CN); Ding, Zhao, Suzhou, 215026 (CN); Zhang, Mingming, Suzhou, 215026 (CN); Wu, Win, Suzhou, 32 215123 (CN)
(74) Representative: Grünecker Patent- und Rechtsanwälte PartG mbB

(57) **Abstract**

The present invention discloses a transmission mechanism, an electric drive device, and a terminal crimping device. The transmission mechanism comprises: an outer sleeve (11), used for fixing to a movable block (3); and an eccentric wheel (12) which is rotatably installed in the outer sleeve (11) and can be rotated relative to the outer sleeve (11). The eccentric wheel (12) has a mounting hole (120) suitable for mounting on a drive shaft (20), and the central axis of the mounting hole (120) is parallel to and at a predetermined distance from the central axis of the eccentric wheel (12), so that the transmission mechanism (1) can convert the rotational motion of the drive shaft (20) into linear reciprocating motion of the movable block (3). The electric drive device of the present invention not only greatly improves the terminal crimping speed, but also has the advantages of small size and low cost.

## Description

### CROSS-REFERENCE TO RELATED APPLICATION

This application claims the benefit of Chinese Patent Application No. CN202510389837.8 filed on March 28, 2025 in the State Intellectual Property Office of China, the whole disclosure of which is incorporated herein by reference.

### BACKGROUND OF THE INVENTION

### Field of the Invention

The present invention relates to a transmission mechanism, an electric drive device comprising the transmission mechanism, and a terminal crimping device comprising the electric drive device.

### Description of the Related Art

In the prior art, a terminal crimping device typically includes a fixed block, a movable block mounted in the guide groove of the fixed block, a crimping block mounted at the bottom of the movable block, and a cylinder mounted on the fixed block. The piston rod of the cylinder is connected to the movable block, which is used to drive the movable block to move along the guide groove. The movable block is used to drive the crimping block to move vertically, in order to crimp the terminal onto a flexible flat cable or flexible circuit board. The crimping block is used to clamp and crimp the terminal, keeping it in the correct crimping position to ensure good crimping result. However, the slow response of the cylinder results in a slow crimping speed of the terminal crimping device, which seriously restricts the efficiency of terminal crimping. In addition, the cylinder drive device also has the disadvantages of large volume and high cost.

### SUMMARY OF THE INVENTION

The present invention has been made to overcome or alleviate at least one aspect of the above mentioned disadvantages.

According to an aspect of the present invention, there is provided a transmission mechanism. The transmission mechanism comprises: an outer sleeve, used for fixing to a movable block; and an eccentric wheel which is rotatably installed in the outer sleeve and can be rotated relative to the outer sleeve. The eccentric wheel has a mounting hole suitable for mounting on a drive shaft, and the central axis of the mounting hole is parallel to and at a predetermined distance from the central axis of the eccentric wheel, so that the transmission mechanism can convert the rotational motion of the drive shaft into linear reciprocating motion of the movable block.

According to another exemplary embodiment of the present invention, the transmission mechanism further comprises multiple rollers which are arranged in a rolling manner between the outer sleeve and the eccentric wheel and distributed at intervals in the circumferential direction of the outer sleeve. When the eccentric wheel is rotated relative to the outer sleeve, the roller comes into rolling contact with the eccentric wheel and the outer sleeve to reduce friction between the outer sleeve and the eccentric wheel.

According to another exemplary embodiment of the present invention, the transmission mechanism further comprises a cylindrical cage which is arranged between the outer sleeve and the eccentric wheel and has multiple limiting holes formed in its peripheral wall, the multiple rollers are respectively rollably accommodated in multiple limiting holes of the cylindrical cage.

According to another exemplary embodiment of the present invention, the roller is a cylindrical roller, and the limiting hole is a strip-shaped hole; or the roller is a spherical ball, and the limiting hole is a circular hole.

According to another aspect of the present invention, there is provided an electric drive device. The electric drive device comprises: a servo motor with a drive shaft; and the above transmission mechanism. The drive shaft is installed into the mounting hole of the eccentric wheel of the transmission mechanism for driving the rotation of the eccentric wheel.

According to an exemplary embodiment of the present invention, a protruding key is formed on the outer peripheral surface of the drive shaft, and a strip-shaped groove is formed on the inner peripheral surface of the mounting hole of the eccentric wheel, the protruding key is engaged with the strip-shaped groove to position the eccentric wheel in the circumferential direction.

According to another aspect of the present invention, there is provided a terminal crimping device. The terminal crimping device comprises: a fixed block which is formed with a vertically extending guide groove; a movable block which is installed in the guide groove and can be moved along the guide groove; a crimping block which is installed at the bottom of the movable block in a movable manner, and can be moved in a vertical direction relative to the movable block; and the above electric drive device. The servo motor of the electric drive device is installed on the fixed block, and the outer sleeve of the electric drive device is fixed to the movable block, the electric drive device is used to drive the movable block to reciprocate in the vertical direction, the crimping block is adapted to move along the vertical direction under the drive of the movable block to crimp a terminal onto an electrical connection member.

According to another exemplary embodiment of the present invention, the terminal crimping device further comprises an elastic component which is compressed between the movable block and the crimping block.

According to another exemplary embodiment of the present invention, an installation slot is formed on the movable block, and the outer sleeve is fixedly installed in the installation slot of the movable block.

According to another exemplary embodiment of the present invention, the terminal crimping device further comprises a mounting plate which is fixed to a flange of a housing of the servo motor, the top of the mounting plate is connected to the top wall of the fixed block to mount the servo motor onto the fixed block.

According to another exemplary embodiment of the present invention, the terminal crimping device further comprises an adjusting bolt which passes through the top wall of the fixed block and is threaded with the top of the mounting plate to connect the mounting plate to the fixed block. The position of the mounting plate relative to the fixed block in the vertical direction can be adjusted by rotating the adjusting bolt, so that the initial position of the crimping block in the vertical direction can be adjusted by rotating the adjusting bolt.

According to another exemplary embodiment of the present invention, the electrical connection member is a flexible flat cable, a flexible circuit board, or a circular cable, and the terminal crimping device is used to crimp the terminal onto the flexible flat cable, the flexible circuit board, or the circular cable.

In the aforementioned exemplary embodiments according to the present invention, the electric drive device composed of a servo motor and an eccentric transmission mechanism can greatly improve the terminal crimping speed. Compared with existing cylinder drive devices, the electric drive device of the present invention can increase the terminal crimping speed by several times, even tens of times. In addition, the electric drive device in the present invention also has the advantages of small size and low cost.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a transmission mechanism according to an exemplary embodiment of the present invention;
Figure 2 shows an illustrative exploded view of a transmission mechanism according to an exemplary embodiment of the present invention;
Figure 3 shows an illustrative perspective view of a cylindrical cage and rollers of a transmission mechanism according to an exemplary embodiment of the present invention;
Figure 4 shows a sectional view of a transmission mechanism according to an exemplary embodiment of the present invention;
Figure 5 shows an exploded sectional view of a transmission mechanism according to an exemplary embodiment of the present invention;
Figure 6 shows an illustrative exploded view of an electric drive device according to an exemplary embodiment of the present invention;
Figure 7 shows an illustrative assembly view of an electric drive device according to an exemplary embodiment of the present invention;
Figure 8 shows an illustrative assembly view of the movable block, crimping block, elastic component, and transmission mechanism of the terminal crimping device according to an exemplary embodiment of the present invention;
Figure 9 shows an illustrative exploded view of a terminal crimping device according to an exemplary embodiment of the present invention;
Figure 10 shows an illustrative assembly view of a terminal crimping device according to an exemplary embodiment of the present invention; and
Figure 11 shows a cross-sectional view of a terminal crimping device according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a transmission mechanism. The transmission mechanism comprises: an outer sleeve, used for fixing to a movable block; and an eccentric wheel which is rotatably installed in the outer sleeve and can be rotated relative to the outer sleeve. The eccentric wheel has a mounting hole suitable for mounting on a drive shaft, and the central axis of the mounting hole is parallel to and at a predetermined distance from the central axis of the eccentric wheel, so that the transmission mechanism can convert the rotational motion of the drive shaft into linear reciprocating motion of the movable block.

According to another general concept of the present invention, there is provided an electric drive device. The electric drive device comprises: a servo motor with a drive shaft; and the above transmission mechanism. The drive shaft is installed into the mounting hole of the eccentric wheel of the transmission mechanism for driving the rotation of the eccentric wheel.

According to another general concept of the present invention, there is provided a terminal crimping device. The terminal crimping device comprises: a fixed block which is formed with a vertically extending guide groove; a movable block which is installed in the guide groove and can be moved along the guide groove; a crimping block which is installed at the bottom of the movable block in a movable manner, and can be moved in a vertical direction relative to the movable block; and the above electric drive device. The servo motor of the electric drive device is installed on the fixed block, and the outer sleeve of the electric drive device is fixed to the movable block, the electric drive device is used to drive the movable block to reciprocate in the vertical direction, the crimping block is adapted to move along the vertical direction under the drive of the movable block to crimp a terminal onto an electrical connection member.

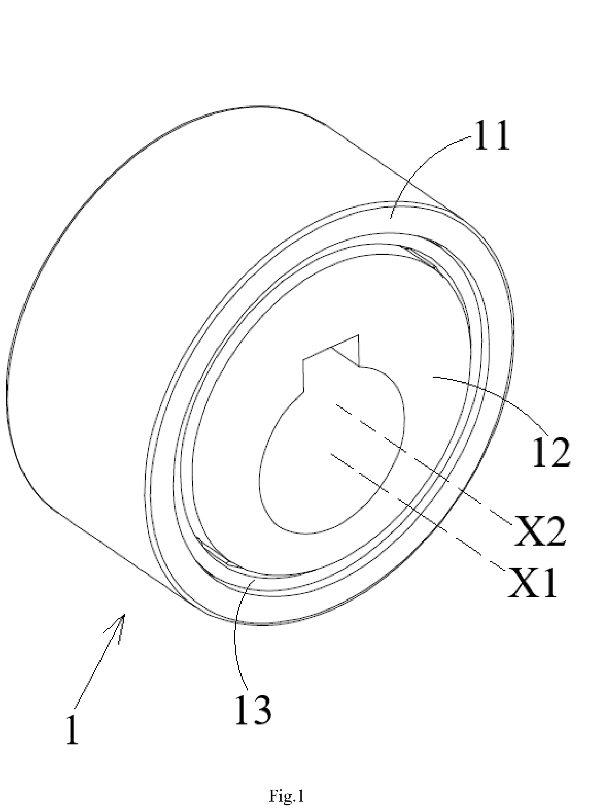

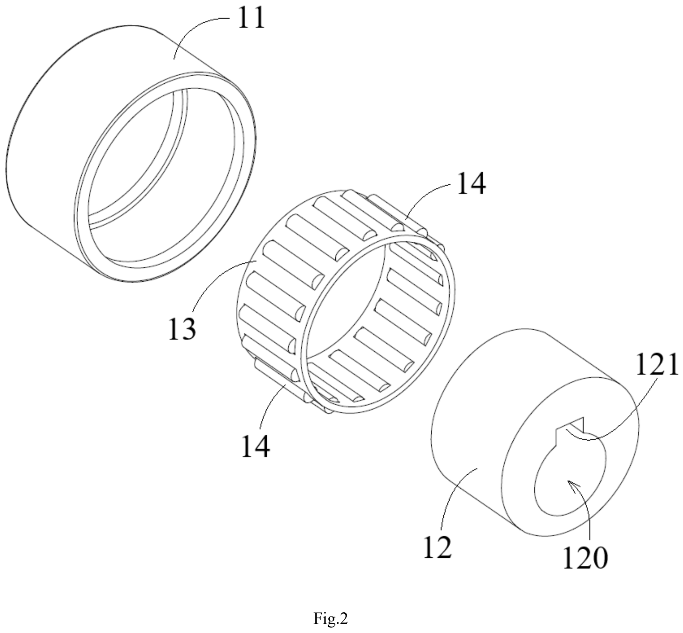

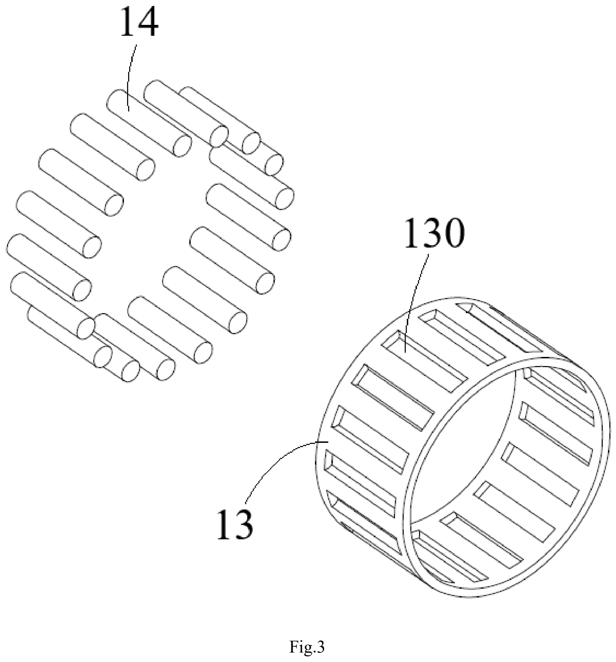

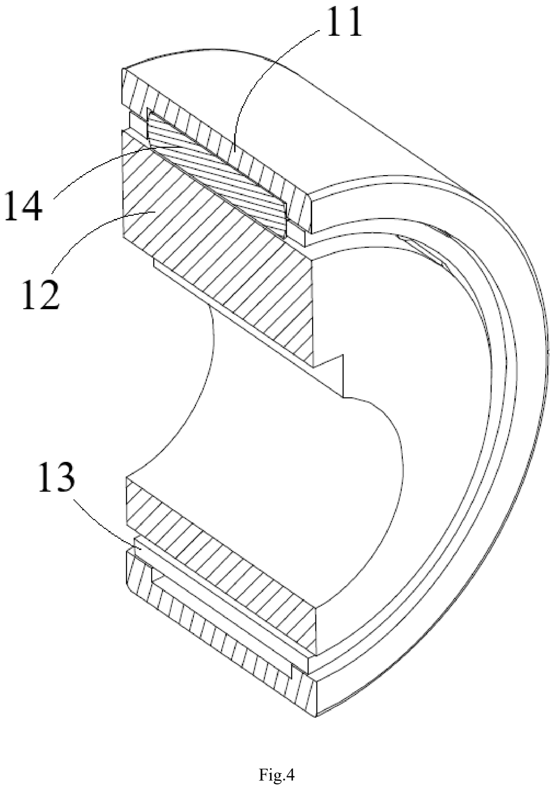

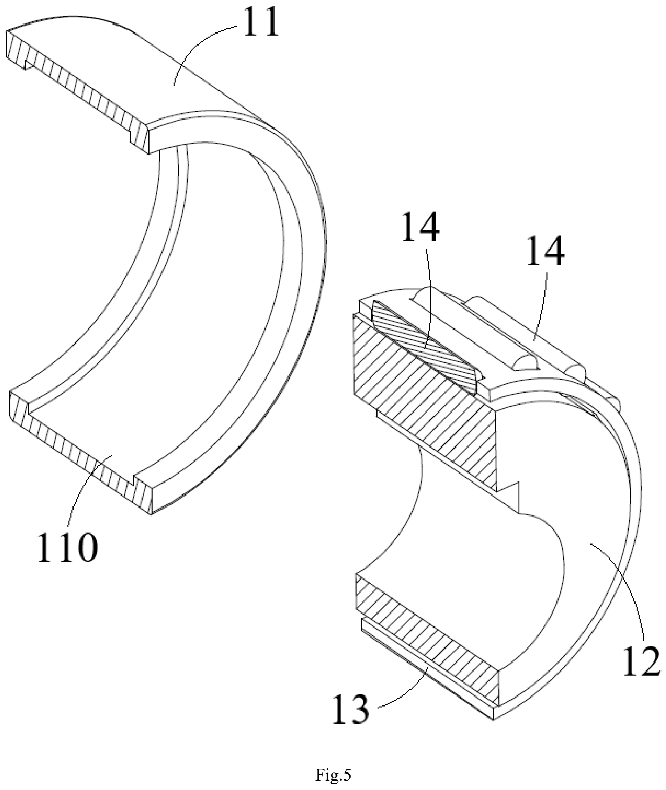

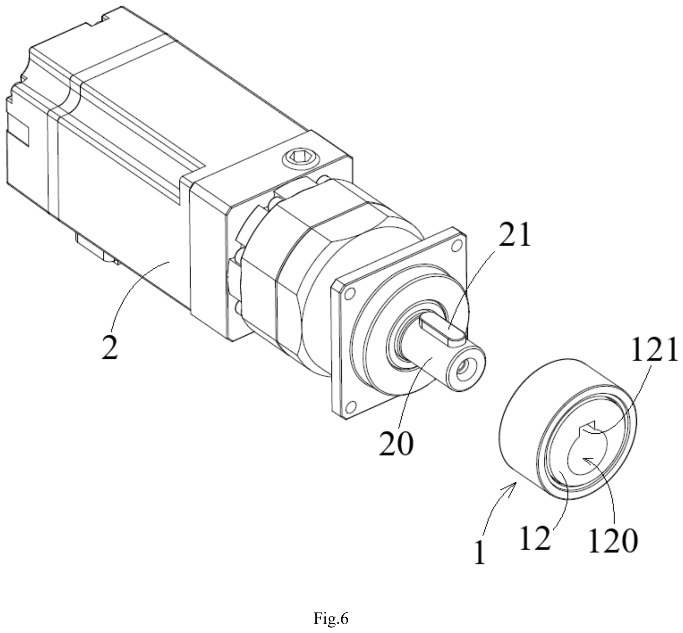

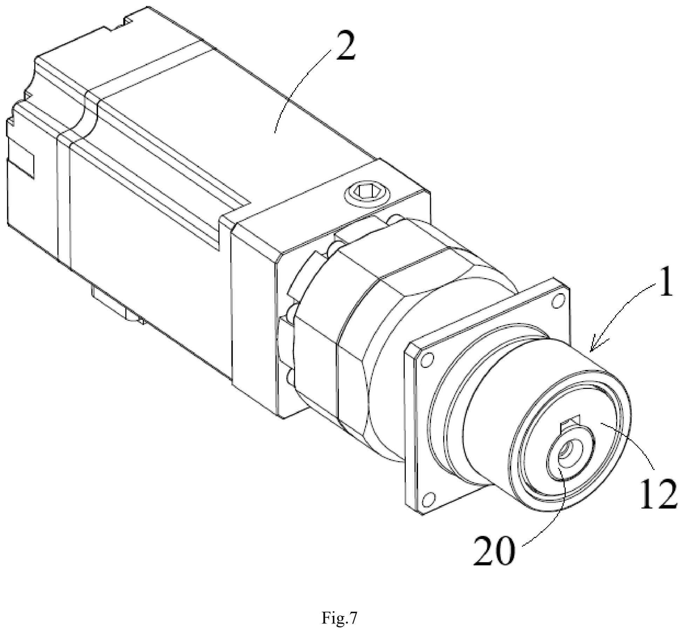

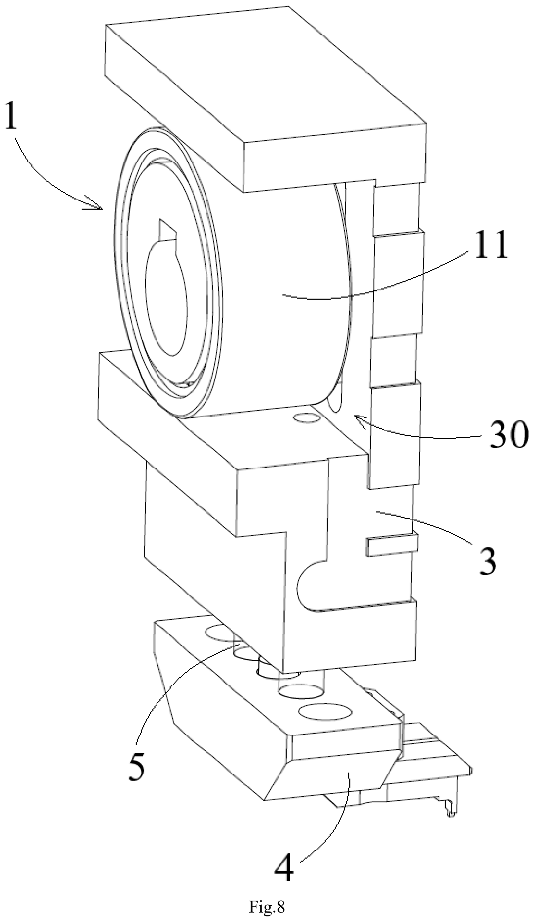

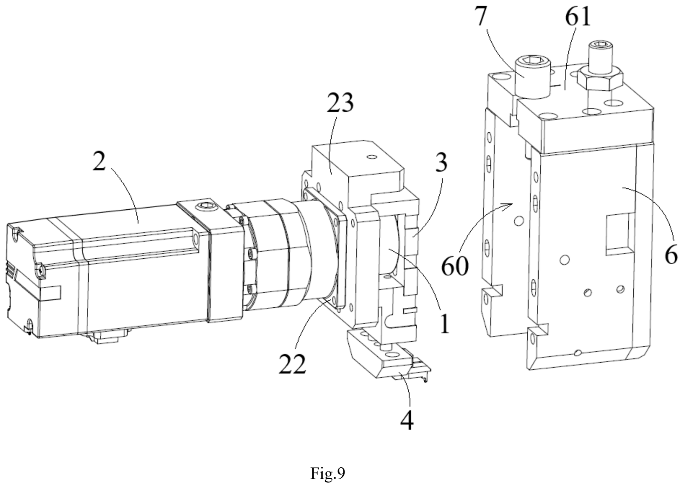

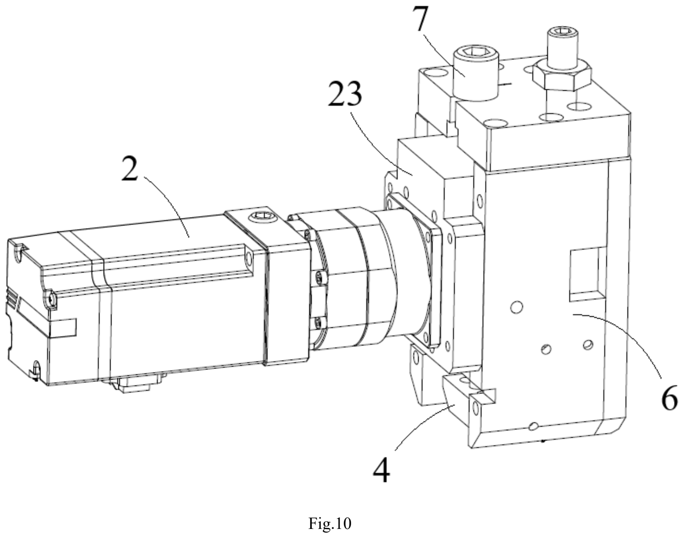

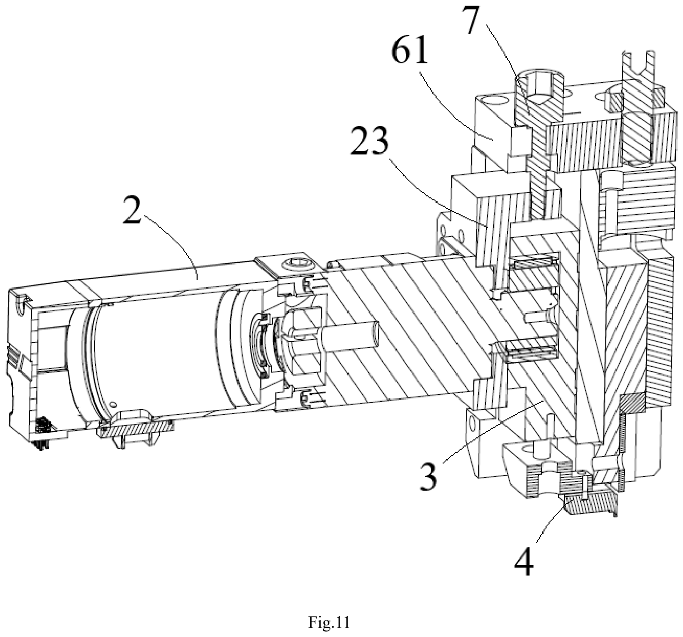

Figure 1 shows an illustrative perspective view of a transmission mechanism 1 according to an exemplary embodiment of the present invention; Figure 2 shows an illustrative exploded view of a transmission mechanism 1 according to an exemplary embodiment of the present invention; Figure 3 shows an illustrative perspective view of the cylindrical cage 13 and rollers 14 of the transmission mechanism 1 according to an exemplary embodiment of the present invention; Figure 4 shows a sectional view of a transmission mechanism 1 according to an exemplary embodiment of the present invention; Figure 5 shows an exploded sectional view of a transmission mechanism 1 according to an exemplary embodiment of the present invention; Figure 6 shows an illustrative exploded view of an electric drive device according to an exemplary embodiment of the present invention; Figure 7 shows an illustrative assembly view of an electric drive device according to an exemplary embodiment of the present invention; Figure 8 shows an illustrative assembly view of the movable block 3, crimping block 4, elastic component 5, and transmission mechanism 1 of the terminal crimping device according to an exemplary embodiment of the present invention; Figure 9 shows an illustrative exploded view of a terminal crimping device according to an exemplary embodiment of the present invention; Figure 10 shows an illustrative assembly view of a terminal crimping device according to an exemplary embodiment of the present invention; Figure 11 shows a cross-sectional view of a terminal crimping device according to an exemplary embodiment of the present invention.

As shown in Figures 1 to 10, in an exemplary embodiment of the present invention, a transmission mechanism 1 is disclosed. The transmission mechanism 1 includes an outer sleeve 11 and an eccentric wheel 12. The outer sleeve 11 is used to fix onto a movable block 3. The eccentric wheel 12 is rotatably installed in the outer sleeve 11 and can be rotated relative to the outer sleeve 11. The eccentric wheel 12 has a mounting hole 120 suitable for mounting on a drive shaft 20, and the central axis X1 of the mounting hole 120 is parallel to the central axis X2 of the eccentric wheel 12 and spaced a predetermined distance d from the central axis X2 of the eccentric wheel 12, so that the transmission mechanism 1 can convert the rotational motion of the drive shaft 20 into linear reciprocating motion of the movable block 3.

As shown in Figures 1 to 10, in the illustrated embodiment, the transmission mechanism 1 further includes multiple rollers 14, which are arranged to roll between the outer sleeve 11 and the eccentric wheel 12 and distributed at intervals in the circumferential direction of the outer sleeve 11. When the eccentric wheel 12 rotates relative to the outer sleeve 11, the roller 14 comes into rolling contact with the eccentric wheel 12 and the outer sleeve 11 to reduce friction between the outer sleeve 11 and the eccentric wheel 12.

As shown in Figures 1 to 10, in the illustrated embodiment, the transmission mechanism 1 further comprises a cylindrical cage 13, which is arranged between the outer sleeve 11 and the eccentric wheel 12 and has multiple limiting holes 130 formed in its peripheral wall. Multiple rollers 14 are respectively rollably accommodated in multiple limiting holes 130 of the cylindrical cage 13.

As shown in Figures 1 to 10, in the illustrated embodiment, the roller 14 is a cylindrical roller, and the limiting hole 130 is a strip-shaped hole. However, the present invention is not limited to the illustrated embodiments. For example, in another exemplary embodiment of the present invention, the roller 14 may be a spherical ball, and the limiting hole 130 may be a circular hole.

As shown in Figures 1 to 10, in another exemplary embodiment of the present invention, an electric drive device is also disclosed. The electric drive device includes a servo motor 2 and the aforementioned transmission mechanism 1. The servo motor 2 has a drive shaft 20. The drive shaft 20 is installed into the mounting hole 120 of the eccentric wheel 12 of the transmission mechanism 1, for driving the rotation of the eccentric wheel 12.

As shown in Figures 1 to 10, in the illustrated embodiment, a protruding key 21 is formed on the outer peripheral surface of the drive shaft 20, and a strip-shaped groove 121 is formed on the inner peripheral surface of the mounting hole 120 of the eccentric wheel 12. The protruding key 21 is engaged with the strip-shaped groove 121 to position the eccentric wheel 12 in the circumferential direction.

As shown in Figures 1 to 10, in another exemplary embodiment of the present invention, a terminal crimping device is also disclosed. The terminal crimping device includes: a fixed block 6, a movable block 3, a crimping block 4, and the aforementioned electric drive device. The fixed block 6 is formed with a vertically extending guide groove 60. The movable block 3 is installed in the guide groove 60 in a movable manner and can be moved vertically along the guide groove 60. The crimping block 4 is installed at the bottom of the movable block 3 in a movable manner and can be moved vertically relative to the movable block 3. The servo motor 2 of the electric drive device is installed on the fixed block 6, and the outer sleeve 11 of the electric drive device is fixed to the movable block 3. The electric drive device is used to drive the movable block 3 to reciprocate in the vertical direction. The crimping block 4 is suitable for moving vertically under the drive of the movable block 3 to crimp a terminal (not shown) onto an electrical connection member (not shown).

As shown in Figures 1 to 10, in the illustrated embodiment, the terminal crimping device further comprises an elastic component 5. The elastic component 5 is compressed between the movable block 3 and the crimping block 4. In the illustrated embodiment, the elastic component 5 may include multiple helical springs arranged side by side.

As shown in Figures 1 to 10, in the illustrated embodiment, an installation slot 30 is formed on the movable block 3, and the outer sleeve 11 is fixedly installed in the installation slot 30 of the movable block 3.

As shown in Figures 1 to 10, in the illustrated embodiment, the terminal crimping device further comprises a mounting plate 23, which is fixed to the flange 22 of the housing of the servo motor 2. The top of mounting plate 23 is connected to the top wall 61 of fixed block 6 to mount the servo motor 2 onto the fixed block 6.

As shown in Figures 1 to 10, in the illustrated embodiment, the terminal crimping device further comprises an adjusting bolt 7, which passes through the top wall 61 of the fixed block 6 and is threaded with the top of the mounting plate 23 to connect the mounting plate 23 to the fixed block 6. The position of mounting plate 23 relative to fixed block 6 in the vertical direction can be adjusted by rotating the adjusting bolt 7, so that the initial position of crimping block 4 in the vertical direction can be adjusted by rotating the adjusting bolt 7.

As shown in Figures 1 to 10, in the illustrated embodiment, the electrical connection member can be a flexible flat cable, flexible circuit board, or circular cable, and the terminal crimping device is used to crimp the terminal onto the flexible flat cable, flexible circuit board, or circular cable.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A transmission mechanism, comprising:
an outer sleeve (11), used for fixing to a movable block (3); and
an eccentric wheel (12) which is rotatably installed in the outer sleeve (11) and can be rotated relative to the outer sleeve (11),
wherein the eccentric wheel (12) has a mounting hole (120) suitable for mounting on a drive shaft (20), and the central axis of the mounting hole (120) is parallel to and at a predetermined distance from the central axis of the eccentric wheel (12), so that the transmission mechanism (1) can convert the rotational motion of the drive shaft (20) into linear reciprocating motion of the movable block (3).

2. The transmission mechanism according to claim 1, further comprising:
multiple rollers (14) which are arranged in a rolling manner between the outer sleeve (11) and the eccentric wheel (12) and distributed at intervals in the circumferential direction of the outer sleeve (11),
wherein when the eccentric wheel (12) is rotated relative to the outer sleeve (11), the roller (14) comes into rolling contact with the eccentric wheel (12) and the outer sleeve (11) to reduce friction between the outer sleeve (11) and the eccentric wheel (12).

3. The transmission mechanism according to claim 2, further comprising:
a cylindrical cage (13) which is arranged between the outer sleeve (11) and the eccentric wheel (12) and has multiple limiting holes (130) formed in its peripheral wall,
wherein the multiple rollers (14) are respectively rollably accommodated in multiple limiting holes (130) of the cylindrical cage (13).

4. The transmission mechanism according to claim 3,
wherein the roller (14) is a cylindrical roller, and the limiting hole (130) is a strip-shaped hole; or
wherein the roller (14) is a spherical ball, and the limiting hole (130) is a circular hole.

5. An electric drive device, comprising:
a servo motor (2) with a drive shaft (20); and
the transmission mechanism (1) according to any one of claims 1-4,
wherein the drive shaft (20) is installed into the mounting hole (120) of the eccentric wheel (12) of the transmission mechanism (1) for driving the rotation of the eccentric wheel (12).

6. The electric drive device according to claim 5,
wherein a protruding key (21) is formed on the outer peripheral surface of the drive shaft (20), and a strip-shaped groove (121) is formed on the inner peripheral surface of the mounting hole (120) of the eccentric wheel (12), the protruding key (21) is engaged with the strip-shaped groove (121) to position the eccentric wheel (12) in the circumferential direction.

7. A terminal crimping device, comprising:
a fixed block (6) which is formed with a vertically extending guide groove (60);
a movable block (3) which is installed in the guide groove (60) and can be moved along the guide groove (60);
a crimping block (4) which is installed at the bottom of the movable block (3) in a movable manner, and can be moved in a vertical direction relative to the movable block (3); and
the electric drive device according to claim 5 or 6,
wherein the servo motor (2) of the electric drive device is installed on the fixed block (6), and the outer sleeve (11) of the electric drive device is fixed to the movable block (3), the electric drive device is used to drive the movable block (3) to reciprocate in the vertical direction,
wherein the crimping block (4) is adapted to move along the vertical direction under the drive of the movable block (3) to crimp a terminal onto an electrical connection member.

8. The terminal crimping device according to claim 7, further comprising:
an elastic component (5) which is compressed between the movable block (3) and the crimping block (4).

9. The terminal crimping device according to claim 7,
wherein an installation slot (30) is formed on the movable block (3), and the outer sleeve (11) is fixedly installed in the installation slot (30) of the movable block (3).

10. The terminal crimping device according to claim 9, further comprising:
a mounting plate (23) which is fixed to a flange (22) of a housing of the servo motor (2),
wherein the top of the mounting plate (23) is connected to the top wall (61) of the fixed block (6) to mount the servo motor (2) onto the fixed block (6).

11. The terminal crimping device according to claim 10, further comprising:
an adjusting bolt (7) which passes through the top wall (61) of the fixed block (6) and is threaded with the top of the mounting plate (23) to connect the mounting plate (23) to the fixed block (6),
wherein the position of the mounting plate (23) relative to the fixed block (6) in the vertical direction can be adjusted by rotating the adjusting bolt (7), so that the initial position of the crimping block (4) in the vertical direction can be adjusted by rotating the adjusting bolt (7).

12. The terminal crimping device according to claim 7,
wherein the electrical connection member is a flexible flat cable, a flexible circuit board, or a circular cable, and the terminal crimping device is used to crimp the terminal onto the flexible flat cable, the flexible circuit board, or the circular cable.
